# FASCICULE DE BREVET EUROPEEN

(11) **EP 2 020 182 B1**
(45) Date de publication et mention de la délivrance du brevet: **11.03.2020**
(21) Numéro de dépôt: 08356111.8
(22) Date de dépôt: 22.07.2008
(51) Int. Cl.: A21B 7/00, A21B 3/13

(54) **ACCESSOIRE DE CUISSON ET APPAREIL ASSOCIÉ**
KOCHZUBEHÖR UND GERÄT DAFÜR
COOKING ACCESSORY AND APPARATUS THEREFOR

(30) Priorité: 30.07.2007 FR 0705556
(43) Date de publication de la demande: 04.02.2009
(73) Titulaire: SEB S.A., 69130 Ecully (FR)
(72) Inventeur: Klinger, Michel, 68140 Stosswihr (FR); Reyes, Lionel, 21120 Echevannes (FR)
(74) Mandataire: Rivière, Sophie

(56) Documents cités:
- EP-A- 0 235 037
- EP-A- 0 432 615
- WO-A-01/78513
- WO-A1-02/43497
- DE-A1- 19 750 489
- DE-U1- 8 619 695
- DE-U1- 20 009 006
- DE-U1- 20 021 868
- DE-U1- 29 913 675
- FR-A- 1 291 673
- FR-A- 1 348 578
- FR-A- 2 682 262
- GB-A- 2 359 981
- US-A1- 2006 219 099

## Description

L'invention concerne le domaine des appareils de cuisson domestique comprenant une enceinte chauffée, et plus particulièrement un accessoire de cuisson de pâte à pain dans un tel appareil.

La cuisson de pâte à pain est généralement réalisée dans un four, dont l'enceinte peut être chauffée de différentes façons, par électricité, gaz, fuel, charbon, énergie solaire,... La pâte à pain est généralement disposée à même la sole du four et s'étale plus ou moins sur ladite sole pendant la cuisson. Toutefois, afin de réaliser des pains de type baguette, il peut être utilisé un moule allongé de section semi-circulaire, afin de former une baguette dite moulée.

Si une telle opération est généralement bien maîtrisée par les professionnels, il peut en être différemment lors d'une réalisation dans la sphère familiale d'une cuisson de ce type, où les différents dosages assez précis, notamment de levure, mais également la quantité de pâte disposée dans les moules, peuvent conduire à des débordements de pâte lors de la phase de cuisson. Les simples moules de section semi-circulaire n'évitent alors pas les débordements de pâte. Cet inconvénient est d'autant plus important lors de l'utilisation d'une machine à pain. En effet, cet appareil, capable de mélanger les différents ingrédients, puis de réaliser leur transformation physique par traitement thermique, comporte notamment une enceinte de cuisson à l'intérieur de laquelle est disposée une cuve de préparation ainsi qu'au moins un élément chauffant souvent positionné à l'intérieur de l'enceinte, en partie inférieure.

Dès lors, un débordement de pâte de son support de cuisson peut entraîner un contact entre ladite pâte et l'élément chauffant, pouvant aboutir à un dégagement important de fumées par carbonisation de la pâte, voire des flammes.

L'un des buts de l'invention est de pallier à cet inconvénient.

Un autre but de l'invention est de présenter un nouveau accessoire pour la réalisation de pains dans un appareil de type machine à pain.

En effet, dans de tels appareils, de nombreux programmes correspondant à différents types de pain sont disponibles, permettant de réaliser une grande variété de pains, avec une cuisson définie selon les goûts et l'addition de composés tels que des céréales, du fromage, des lardons, des raisins secs, des noix, etc.... Des pains spéciaux peuvent ainsi être réalisés à volonté avec une telle machine.

La machine à pain comporte, en outre, de multiples fonctionnalités comme la possibilité de programmer la fabrication du pain et d'en différer la cuisson, le maintien au chaud après la cuisson, etc...

La cuve de préparation, généralement parallélépipédique, comporte une ou deux pales de brassage qui permet(tent) les différentes opérations mécaniques de mélange des ingrédients et de pétrissage de la pâte. La cuve est généralement amovible pour faciliter son nettoyage, tout comme le sont les pales de brassage de la cuve.

Toutefois, la plupart des appareils proposés utilisent la cuve de préparation pour la cuisson du pain, ce qui aboutit à l'obtention d'un pain de forme rectangulaire, et assez haut. Si cette forme de pain est recherchée pour des brioches ou des pains de mie, elle est peu adaptée à la réalisation de pain favorisant la croûte, tel le pain de type baguette.

Il est toutefois connu, par le document US 5,967,020, une machine à pain telle que précédemment évoquée, et dont la cuve peut être remplacée par un support de tôles planes pour la réalisation de produits panifiés ronds de type bagel, petits pains ronds en forme d'anneaux. De tels pains nécessitent d'être brièvement trempés dans l'eau bouillante avant d'être passés au four. L'appareil décrit dans ce brevet comporte ainsi un dispositif de production de vapeur permettant, au préalable de la cuisson par rayonnement et convection, une humidification et un début de cuisson par la vapeur.

Si, certes, cet appareil permet de cuire la pâte préparée dans la cuve, dans un autre contenant que ladite cuve, le support présenté ne permet pas la réalisation de pains de type baguette. Par ailleurs, l'élément chauffant étant disposé en partie basse de l'espace de cuisson, il s'en suit des inhomogénéités de cuisson des différents pâtons selon leur position par rapport à cet élément chauffant. Le document US 2006/0219099 décrit une machine à pain comportant un accessoire de cuisson de pâte à pain.

La présente invention se propose de résoudre les différents problèmes qui viennent d'être exposés en présentant un accessoire de cuisson de pâte à pain suivant la revendication 1.

La présente invention se propose ainsi de réaliser des empreintes, sortes de moules pour supporter la pâte, ces empreintes comportant des extensions verticales des bords longitudinaux, afin de pouvoir réaliser des baguettes moulées dans des fours traditionnels ou dans des machines à pain en réduisant considérablement les risques de débordement par la présence de ces parois verticales.

Par ailleurs, lorsque de tels supports sont utilisés dans une machine à pain, les parois verticales du support se comportent tel un écran de protection thermique, évitant ainsi aux pâtons une exposition trop directe au rayonnement des éléments chauffants de l'enceinte de cuisson. De tels écrans thermiques laissent toutefois grandement la place au passage de l'air pour une cuisson essentiellement par conduction, convection et rayonnement indirect du pain. En effet, un tel support, par la réalisation d'une empreinte, c'est-à-dire d'une marque en relief réalisée par déformation, permet l'obtention d'un véritable contenant pouvant accueillir une masse importante de pain. De la sorte, il est d'une part possible d'utiliser toute la pâte réalisée par la machine lors de la phase de préparation, et d'autre part les bords longitudinaux sensiblement verticaux agissent en synergie avec l'aspect « contenant » des supports puisque ces montants agissent en tant qu'écran thermique afin de limiter le rayonnement direct sur les pâtons pour permettre à la masse de pâte, relativement importante grâce à l'empreinte desdits moules, de cuire uniformément, sans présenter une surface trop cuite par rapport à une cuisson intérieure insuffisante.

La profondeur maximale de chaque empreinte est comprise entre 20 et 50 mm, ce qui permet un bon compromis entre la mie et la croûte du pain, qui fait le succès des pains de type baguette.

Avantageusement, le support présente une section transversale sensiblement semi-circulaire, permettant d'obtenir une forme rappelant la forme des baguettes de boulangerie.

Avantageusement, afin d'individualiser les pains créés et pour tirer le meilleur parti de l'espace de cuisson disponible dans les machines à pain, le support de cuisson comporte au moins deux empreintes situées côte à côte selon leur côté le plus long.

Afin de présenter des pains de type baguette, le rapport longueur sur largeur de chaque empreinte est préférentiellement supérieur à deux, une valeur optimale étant comprise entre 3 et 5. Un tel rapport permet également de ne pas modifier considérablement les formes actuelles de machine à pain pour la réalisation des supports.

Par la réalisation d'empreintes de forme allongée et creuse, la pâte est guidée lors de l'opération de cuisson, ce qui permet de disposer d'une quantité assez importante de pâte par empreinte.

Par ailleurs, la section en demi-cercle de l'empreinte favorise le démoulage du pain, par la forme évasée.

Un tel rapport permet également de réaliser des baguettes assez courtes, dont le poids est compris entre 100 et 150 g environ, de telles baguettes étant bien adaptées à une consommation individuelle de pain.

Afin de faciliter la manipulation du support, mais également son maintien dans la zone de cuisson, ses bords transversaux comportent une zone sensiblement horizontale.

La présente invention vise un accessoire de cuisson de pâte à pain pour appareil de cuisson, comportant une armature métallique comprenant deux tiges parallèles en forme de U vertical, maintenues entre elles par des tiges horizontales en partie basse, ainsi que par des plaques transversales reliant les branches verticales des tiges, lesdites plaques disposant de fentes en vis-à-vis dans lesquelles sont insérées les extrémités d'un support.

Une telle structure, par l'utilisation de tiges métalliques, facilite la circulation d'air, permettant de cuire uniformément les pâtons, quel que soit leur emplacement. Bien que cet accessoire soit plutôt dédié à une machine à pain, il peut toutefois être utilisé dans un four traditionnel.

Dès lors, afin d'optimiser l'espace de cuisson, préférentiellement dans une machine à pain, l'accessoire comporte quatre plaques transversales disposées deux par deux en vis-à-vis afin de constituer le maintien de deux supports tels que précédemment évoqués.

Par ailleurs, ces quatre plaques permettent également de faire écran à d'éventuels débordements de pâte au niveau des extrémités des supports.

De plus, des poignées de préhension, en partie supérieure de l'accessoire, facilitent la manipulation de ce dernier.

Avantageusement, la présente invention vise également la réalisation d'un appareil électrique de cuisson, comportant un espace de cuisson, des moyens de chauffage de l'espace de cuisson ainsi que des moyens de régulation desdits moyens de chauffage, caractérisé en ce qu'au moins un accessoire de cuisson conforme à l'une des revendications 1 à 7 est disposé dans l'espace de cuisson.

Selon un mode de mise en œuvre de l'invention, l'appareil électrique comporte un espace de préparation de pâte à pain, ainsi qu'une cuve amovible de préparation de la pâte, pouvant être disposée dans l'espace de préparation, en association avec des moyens de pétrissage de ladite pâte.

Un tel appareil est plus connu sous l'appellation machine à pain. Il dispose d'une cuve de préparation de la pâte, dans laquelle des pales de brassage sont disposées, en liaison avec des axes entraînés en rotation par un moteur. La cuve étant amovible, l'accessoire de cuisson peut ainsi avantageusement remplacer ladite cuve sans modification structurelle de l'appareil. Une nouvelle fonctionnalité peut ainsi être ajoutée à peu de frais.

Selon une mise en œuvre préférée de l'invention, l'appareil électrique de préparation de pâte à pain et de cuisson de ladite pâte ne comporte qu'un seul et même espace de préparation et de cuisson de la pâte, permettant de limiter l'encombrement de l'appareil.

Un tel appareil permettant la cuisson de pâtons dans un support pour la réalisation de demi-baguette nécessite toutefois une adaptation au niveau du programme de réalisation. L'appareil comporte ainsi un programme spécifique permettant une préparation de la pâte dans la cuve, par des cycles automatiques de pétrissage et de levée de la pâte, préparation suivie d'une cuisson des pâtons disposés dans les empreintes des supports, le démarrage du cycle de cuisson étant subordonné à au moins une action de l'utilisateur sur l'appareil.

En effet, la préparation étant réalisée dans la cuve, le partage de la pâte et le transfert des pâtons dans les empreintes des supports nécessitent une intervention de l'utilisateur. Dès lors, le programme est prévu pour s'arrêter juste avant le cycle de cuisson, afin de permettre cette mise en forme des pâtons, le cycle de cuisson ne débutant que lorsque l'utilisateur aura validé cette opération de mise en forme.

Cette validation peut prendre différentes formes : soit d'une manière automatique par des contacteurs actionnés par le support ou par l'accessoire, soit simplement par un appui sur une touche donnée par l'utilisateur.

Lors des essais de mise au point de l'appareil, il s'est avéré que selon la position verticale des supports, le pain cuisait différemment. Afin de parfaire l'homogénéité de cuisson, l'appareil électrique de préparation de pâte à pain et de cuisson de ladite pâte comporte deux éléments chauffants, de type éléments chauffants blindés, l'un étant disposé en partie basse de l'espace de cuisson, l'autre étant disposé en partie haute dudit espace.

Par la suite, en modifiant l'alimentation des différents éléments chauffants, il est possible d'obtenir une cuisson uniforme des différents pâtons, indépendamment de leur position dans l'espace de cuisson.

Selon un aspect complémentaire de l'invention, afin de faciliter le rangement de l'accessoire de maintien du ou des support(s) de cuisson, équipé dudit ou desdits support(s), les dimensions de cet accessoire ont été étudiées pour qu'il puisse être rangé dans la cuve de préparation de la pâte dont est pourvu l'appareil, profitant ainsi de l'espace libre de la cuve. Ainsi, cet accessoire, et les supports associés, n'occupent pas de place supplémentaire lorsque l'appareil n'est pas utilisé.

D'autres caractéristiques et avantages de l'invention se dégageront de la description qui va suivre en regard des dessins annexés qui ne sont donnés qu'à titre d'exemples non limitatifs.

Les figures 1, 2 et 3 sont respectivement des vues de dessus, de face et en perspective d'un support de cuisson de pâte à pain pour machine à pain selon l'invention.

La figure 4 est une vue en perspective d'un accessoire de cuisson de pâte à pain équipé de deux supports de cuisson.

La figure 5 présente une vue en perspective avant d'une machine à pain selon l'invention.

Les figures 6 et 7 sont des vues en perspective avant d'une machine à pain selon l'invention, l'appareil étant équipé, pour la figure 6, d'une cuve de préparation et de cuisson, et, pour la figure 7, d'un accessoire de cuisson comportant les supports de cuisson.

Les figures 8 et 9 présentent une coupe de l'appareil équipé de la cuve de préparation et de cuisson, respectivement en coupe longitudinale et en coupe transversale.

Les figures 10 et 11 sont des vues analogues aux figures 8 et 9, l'appareil étant alors équipé d'un accessoire de cuisson comportant les supports de cuisson selon l'invention.

La figure 12 présente une vue en perspective de l'agencement de certains éléments de la machine à pain selon l'invention.

La figure 13 présente une vue en perspective du rangement de l'accessoire de cuisson dans la cuve.

Les figures 14 à 17 sont des vues analogues respectivement aux figures 1 à 4, où l'accessoire de cuisson est présenté dans une variante de réalisation.

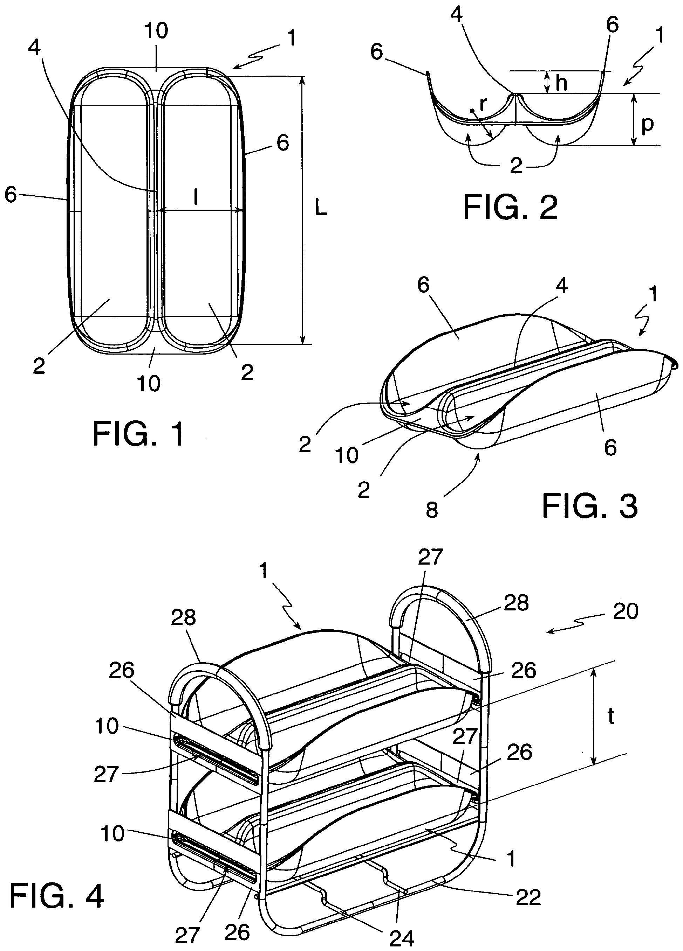

En référence aux figures 1 à 4, la présente invention se propose la réalisation d'un support 1 de pâtons de pain pour leur cuisson dans une machine à pain. Un tel support 1 comprend avantageusement deux empreintes 2 de forme allongée, disposées côte à côte selon leur longueur, séparées l'une de l'autre par un rebord 4.

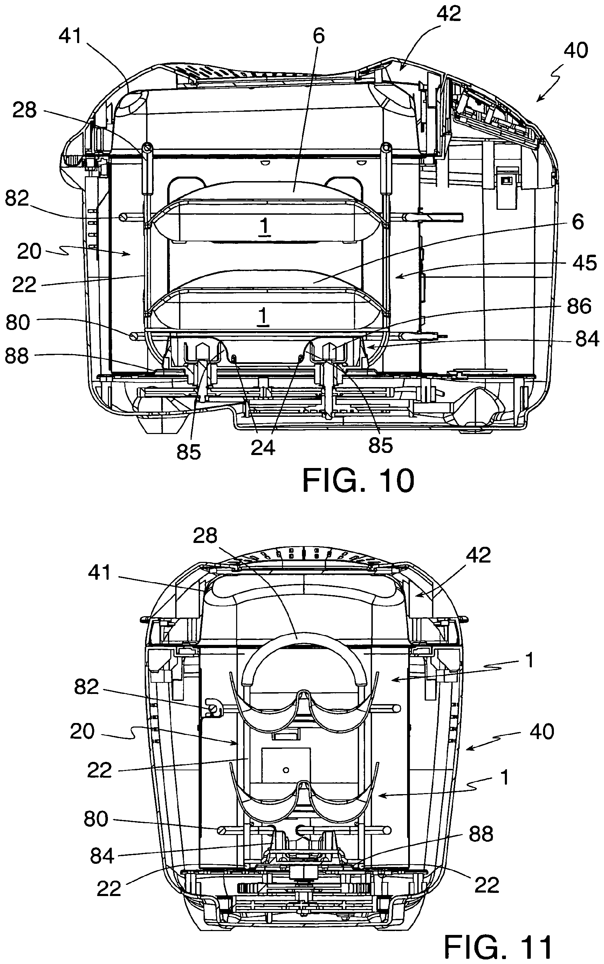

Les empreintes présentent une longueur L, une largeur l, et une profondeur maximale p. Tel que le montre la figure 2, ainsi que la vue en coupe figure 11, les empreintes présentent une section sensiblement en demi-cercle, de rayon r, de valeur légèrement inférieure à la profondeur des empreintes, prise par rapport au niveau constitué par le rebord 4. Par ailleurs, les extrémités 8 des empreintes sont également de section longitudinale en arc de cercle, de rayon sensiblement identique au rayon r.

Selon l'exemple proposé, la longueur L est voisine de 180 mm, pour une largeur l de l'ordre de 60 mm. La profondeur p est de l'ordre de 35 mm, et le rayon r de la section des empreintes est voisin de 25 mm.

Les côtés latéraux du support 1 présentent un bord plat 10 facilitant la préhension et le maintien des supports.

Les figures 2 et 3 mettent bien en valeur un autre aspect du support selon l'invention, à savoir un prolongement vertical 6 des bords longitudinaux du support. Cette paroi 6 fait notamment office d'écran thermique lors de la cuisson, tel qu'il sera expliqué ultérieurement.

La forme de ce prolongement de paroi est galbée en présentant des extrémités de raccordement courbées avec les bords latéraux des empreintes. La hauteur maximale h de ces écrans thermiques, telle que présentée par le support, vers le milieu de sa longueur, et prise par rapport au niveau constitué par le rebord 4, est de l'ordre de 15 mm.

La figure 2 montre également que les écrans thermiques sont légèrement inclinés vers l'extérieur du support, afin de faciliter le démoulage du pain après cuisson.

La figure 4 montre l'association de deux supports tels que décrits, avec un accessoire 20 de maintien de ces supports dans une machine à pain.

Un tel accessoire se compose de deux tiges métalliques 22 parallèles, en forme de U vertical, reliées entre elles, d'une part par des tiges 24 horizontales en partie basse, et d'autre part à l'aide de plaques métalliques 26 verticales, reliant les branches verticales des tiges 22. Les liaisons entre les tiges et les plaques sont avantageusement réalisées par soudage, mais d'autres techniques d'assemblage mécanique peuvent également être utilisées, en variante de réalisation.

Selon l'exemple proposé de réalisation, les plaques verticales 26 permettant de rigidifier la structure de l'accessoire, présentent également les fonctions de prévention d'éventuels débordements de pâte, ainsi que de maintien des supports dans l'espace de cuisson d'une machine à pain. Ces plaques sont ainsi disposées au même niveau entre deux des branches verticales de chaque tige 22, lesdites plaques présentant des fentes 27 sensiblement horizontales, dans lesquelles peuvent venir se positionner les bords latéraux 10 des supports. Le positionnement et le retrait des supports sont réalisés en jouant sur l'élasticité des tiges 22 pour écarter légèrement les tiges les unes des autres afin d'augmenter légèrement la distance entre les plaques 26.

Deux poignées 28 en liaison avec les extrémités des parties verticales des tiges 22 facilitent cette opération, et permettent également une manipulation aisée de l'accessoire.

Par ailleurs, les deux supports 1 sont éloignés d'une distance t qui, selon l'exemple proposé, est de l'ordre de 75 mm.

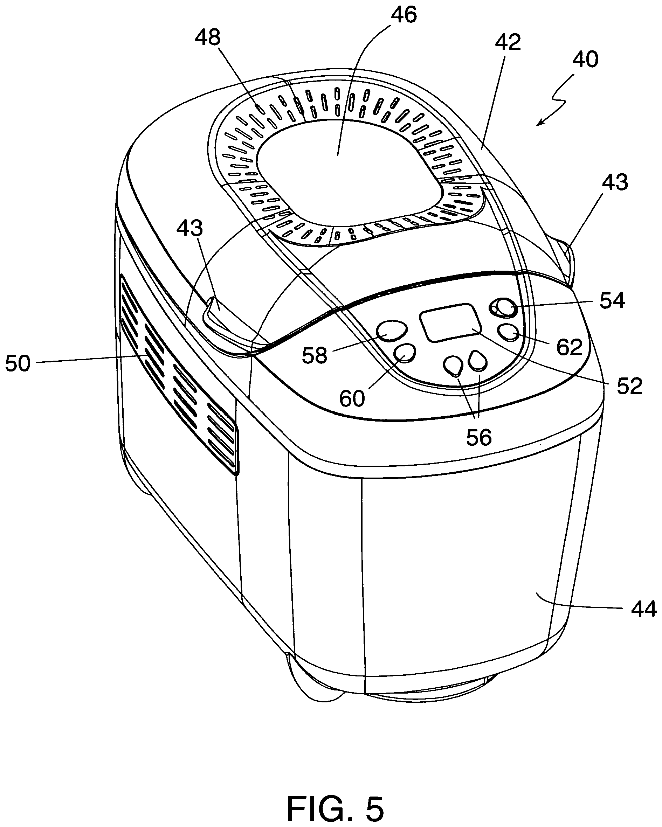

Un tel accessoire est utilisé dans une machine à pain 40, telle que présentée de façon concise à la figure 5. Cet appareil comporte ainsi un couvercle 42 articulé en rotation sur un corps 44, le couvercle, manipulable par des poignées 43, étant équipé d'un hublot 46 de visualisation ainsi que d'ouies 48 périphériques au hublot, les ouies permettant une circulation d'air et l'échappement des vapeurs de cuisson.

D'autres ouies 50 de circulation d'air sont disposées sur les bords latéraux du corps 44 de l'appareil.

En face avant de l'appareil se trouve un panneau de commande, tel qu'il est connu dans de tels appareils. Ce panneau comprend un afficheur 52, ainsi qu'un bouton marche / arrêt 54. Des boutons parmi les boutons 58, 60, 62 permettent de sélectionner un programme spécifique de réalisation de pain. De tels programmes permettent de générer des phases de malaxage et de pétrissage des ingrédients à l'aide des pales disposées dans la cuve, suivies d'une phase de cuisson. Certains programmes ne réalisent que les phases de malaxage et de pétrissage.

Certains, parmi les boutons 58, 60, 62, sont utilisés pour ajuster les différents paramètres influant sur la cuisson (poids, degré de dorage souhaité notamment). Un départ différé peut être également envisagé, des touches 56 permettant de régler l'heure de fin de cuisson.

Selon l'invention, l'appareil comporte un programme spécifique, dénommé par la suite programme « baguette », qui permet l'utilisation de l'accessoire tel qu'il sera expliqué ultérieurement.

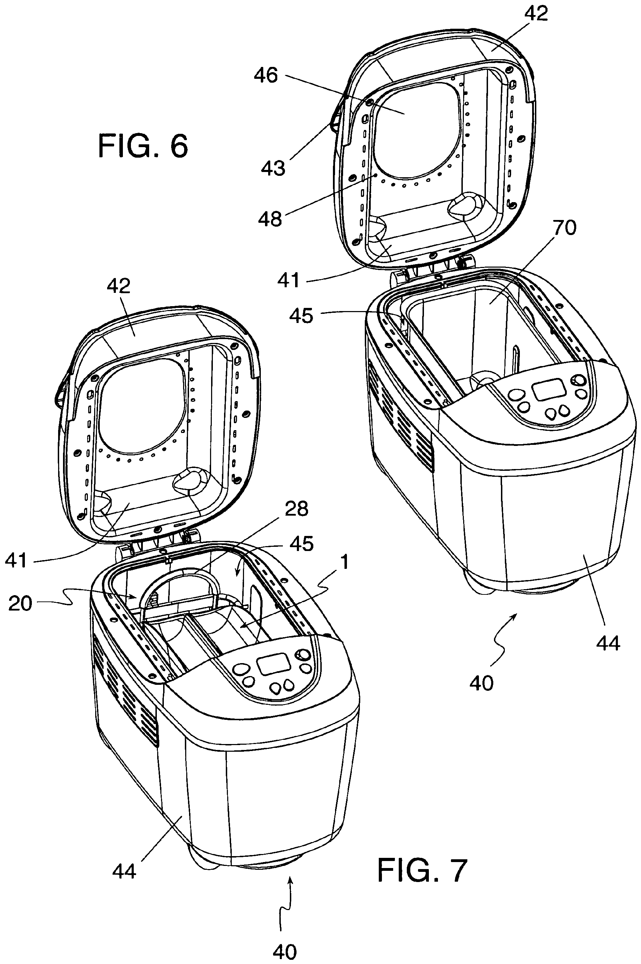

L'intérieur de l'appareil comprend un espace de préparation et de cuisson 45 de forme parallélépipédique, tel qu'il est connu dans ce genre d'appareil, cet espace étant accessible après l'ouverture du couvercle 42, tel que le montrent les figures 6 et 7.

Cet espace 45 est généralement occupé par une cuve 70 de cuisson, tel que visible figures 6, 8 et 9. Deux éléments chauffants 80, 82, de type éléments chauffants blindés, disposés en périphérie intérieure du logement de la cuve, l'un, 80, en partie basse, et l'autre, 82, en partie haute, assurent le chauffage nécessaire de l'espace 45 de préparation et de cuisson dans les différentes étapes de fabrication du pain.

La représentation, sur la figure 6, de l'appareil avec le couvercle 42 ouvert, par rotation sur un axe disposé à l'arrière de l'appareil, permet de distinguer un écran thermique 41 positionné sur la face interne du couvercle, et destiné à protéger l'habillage extérieur du couvercle, réalisé en plastique. Cet aspect est d'autant plus important que l'appareil, selon l'invention, présente un élément chauffant 82 en partie haute de l'espace de cuisson 45.

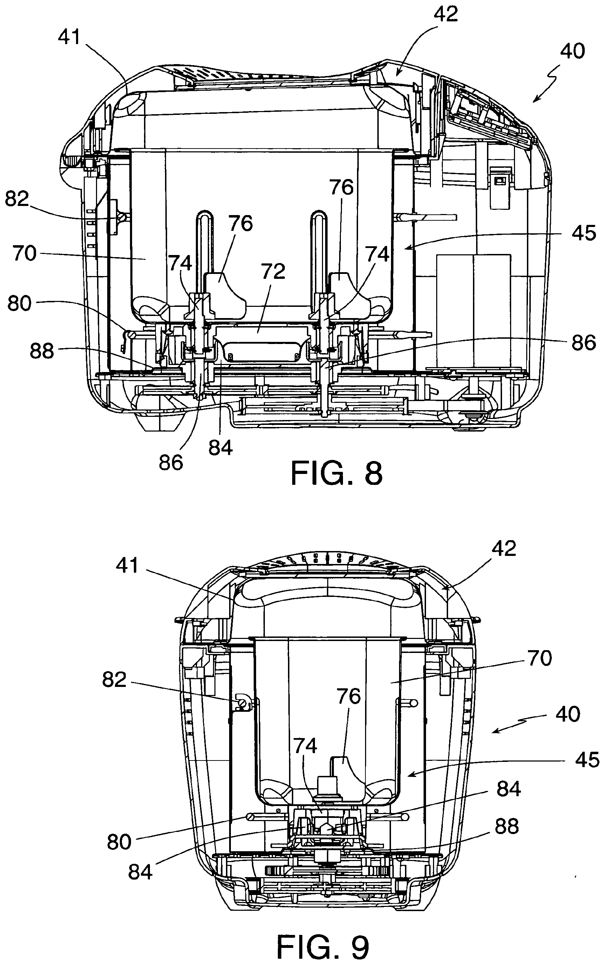

Les figures 8 et 9 montrent le positionnement de la cuve 70 équipée de pales 76 dans l'espace de préparation et de cuisson 45 de l'appareil. Tel qu'il est connu dans ce type d'appareils, la cuve possède une embase 72 de forme parallélépipédique, coopérant avec un socle 84 lié à l'appareil et disposé en partie basse de l'espace de préparation et de cuisson. La coopération entre l'embase 72 de la cuve et le socle 84 est de type serrage élastique par des lames ressorts, sur les bords latéraux du socle.

Cette coopération permet de mettre en coïncidence les axes 74 des pales avec des pignons 86 d'entraînement desdites pales, liés au corps 44, et légèrement proéminents dans l'espace 45.

Selon l'invention, et tel que présenté aux figures 7, 10 et 11, l'accessoire 20, équipé d'un ou de deux supports 1, peut être disposé dans l'espace de cuisson, à la place de la cuve 70.

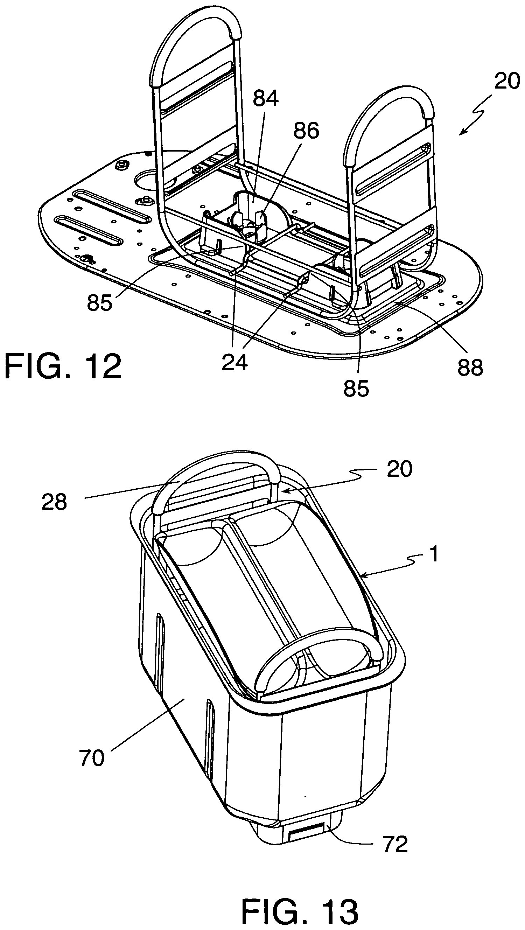

Les deux tiges 22 reposent alors sur le fond horizontal délimitant l'espace 45 de préparation et de cuisson de l'appareil. Les figures 10, 11, et surtout la figure 12 qui est une vue présentant principalement le fond de l'espace de cuisson 45, le socle 84 ainsi que l'accessoire 20, montrent notamment que le socle 84 de réception de la cuve est disposé sur un léger décrochement 88 du fond de logement. L'étendue de ce décrochement, de quelques millimètres de hauteur, est étudié pour venir guider latéralement l'accessoire lors de son positionnement, par la partie basse horizontale des tiges 22, qui se positionne de part et d'autre du décrochement 88, afin de centrer l'accessoire par rapport aux éléments chauffants.

Le guidage longitudinal est assuré par coopération entre les tiges transversales 24 de l'accessoire 20 et des pentes 85 ménagées dans le socle 84, les pentes réalisant un décrochement dans les deux parois verticales des bords longitudinaux du socle, tel qu'il est bien visible figure 12.

L'accessoire ainsi positionné dans l'espace 45, l'élément chauffant supérieur 82 est positionné légèrement au dessous du niveau du bord 4 séparant les deux empreintes du support supérieur, tandis que l'élément chauffant inférieur 80 se trouve légèrement sous le support inférieur.

En fonctionnement, lorsque l'utilisateur désire confectionner du pain à l'aide de l'accessoire 20 tel que présenté, il dispose tout d'abord la cuve 70 et les ingrédients adéquats dans l'appareil et referme le couvercle. Il sélectionne ensuite, avec les boutons 58, le programme « baguette », programme qu'il ajuste avec les boutons 60, 62. Un départ différé peut être envisagé, à l'aide des touches 56.

L'utilisateur démarre ensuite les différents cycles de pétrissage et de levée de la pâte en appuyant sur la touche 54.

Lorsque les différents cycles de pétrissage sont terminés, l'appareil signale la fin de la préparation de la pâte par des bips sonores en association ou non avec des indications lumineuses, et se met en attente.

L'utilisateur doit alors sortir la cuve de l'appareil et séparer la pâte en différents pâtons, à l'aide ou non d'une balance, pâtons, dont le poids est de l'ordre de 125 g, qu'il dispose ensuite dans les empreintes des supports 1 qu'il positionne alors sur l'accessoire 20.

Cet accessoire est ensuite placé dans l'appareil, à la place de la cuve, dans l'espace 45. Le positionnement correct de l'accessoire, tel qu'expliqué précédemment, est facilité par la pente douce réalisant le décrochement 88, ainsi que par la courbure des pentes 85, qui permettent un guidage de l'accessoire lors de son positionnement, l'accessoire se positionnant de manière automatique en « glissant » sur ces différentes pentes et courbures.

L'utilisateur, après avoir refermé le couvercle, signale à l'appareil que le cycle de cuisson peut débuter, par l'appui sur la touche 54. D'autres moyens peuvent être envisagés pour débuter le cycle de cuisson, par exemple par une détection de présence de l'accessoire et de fermeture du couvercle. Le cycle de cuisson débute par une phase de pousse de la pâte suivie d'une phase de cuisson.

Les éléments chauffants étant disposés en périphérie de l'espace de cuisson, ce dernier est chauffé par convection et rayonnement. La présence des écrans thermiques 6 sur les bords longitudinaux des supports masque ainsi considérablement les pâtons disposés en partie supérieure d'un rayonnement direct issu de l'élément chauffant supérieur 82. Ce rayonnement n'est pas totalement supprimé, notamment sur les pâtons inférieurs, et contribue ainsi au dorage de la croûte. Ce dorage est ainsi essentiellement par rayonnement direct pour les pâtons inférieurs, et par rayonnement indirect pour les pâtons supérieurs.

Il est important de constater que la structure filaire de l'accessoire laisse considérablement de place à la circulation d'air, favorisant ainsi les échanges et l'homogénéisation de la cuisson du pain. La dimension des plaques 26 permettant de rigidifier l'accessoire et de maintenir les supports est ainsi réduite pour laisser un passage d'air important entre elles.

Ainsi, le rayonnement de l'élément chauffant inférieur est capté essentiellement par la partie inférieure des supports qui sont préférentiellement en acier avec un revêtement anti-adhésif en contact avec le pain, la résistance supérieure permettant de cuire principalement par rayonnement direct et indirect les parties supérieures des baguettes.

Le confinement de l'espace de cuisson 45, le positionnement des éléments chauffants 80, 82, la forme des supports et notamment la forme galbée des rebords 6, ainsi que la distance t entre les deux supports 1 sont ainsi judicieusement choisis pour assurer une cuisson uniforme et homogène des différents pâtons.

Par ailleurs, l'utilisation de deux éléments chauffants permet de pouvoir modifier ou ajuster la puissance, en pilotant de manière indépendante, tant la puissance, que la durée de fonctionnement de chaque élément chauffant.

Il peut ainsi être envisagé de démarrer le cycle de cuisson par une puissance maximale permettant une montée en température de l'enceinte très rapide, simulant un enfournement du pain dans un four chaud, favorable à la cuisson du pain, puis de diminuer cette puissance pour éviter de brûler le pain.

Un écran thermique peut éventuellement être disposé sous l'élément chauffant supérieur, afin de limiter le rayonnement direct sur les pâtons disposés en partie basse.

Selon l'exemple proposé d'illustration de l'invention, les deux éléments chauffants sont cyclés de manière à produire un rayonnement de grande longueur d'onde, afin de présenter une température de peau inférieure à 600 °C, qui assure un dorage sans brûlage de la croûte, la température étant de l'ordre de 185 °C dans l'espace de cuisson.

Il est également possible de faire fonctionner l'élément chauffant supérieur à pleine puissance pendant quelques minutes à la fin du cycle de cuisson, afin de terminer le dorage du pain.

A la fin du cycle de cuisson, l'appareil signale par des bips sonores que les baguettes sont cuites et stoppe l'alimentation électrique des éléments chauffants. L'utilisateur peut alors sortir l'accessoire 20 de l'espace de cuisson en le tenant par les poignées 28.

Selon un autre aspect de l'invention, et tel qu'illustré figure 13, le rangement de l'accessoire 20 est facilité par le fait que ses dimensions sont étudiées pour qu'il puisse se loger entièrement dans la cuve 70. Seules les poignées 28 dépassent légèrement en partie supérieure. L'ensemble peut ainsi être positionné dans l'appareil en attendant une prochaine utilisation, les poignées 28 ne gênant pas la fermeture du couvercle 42.

La présente invention n'est pas limitée au seul mode de réalisation présenté et peut comprendre de nombreuses variantes de réalisation.

En effet, le support des pâtons peut comporter un nombre d'empreintes différent de celui présenté, selon l'espace disponible. Le nombre de supports disposés dans l'espace de cuisson peut aussi varier selon la place disponible.

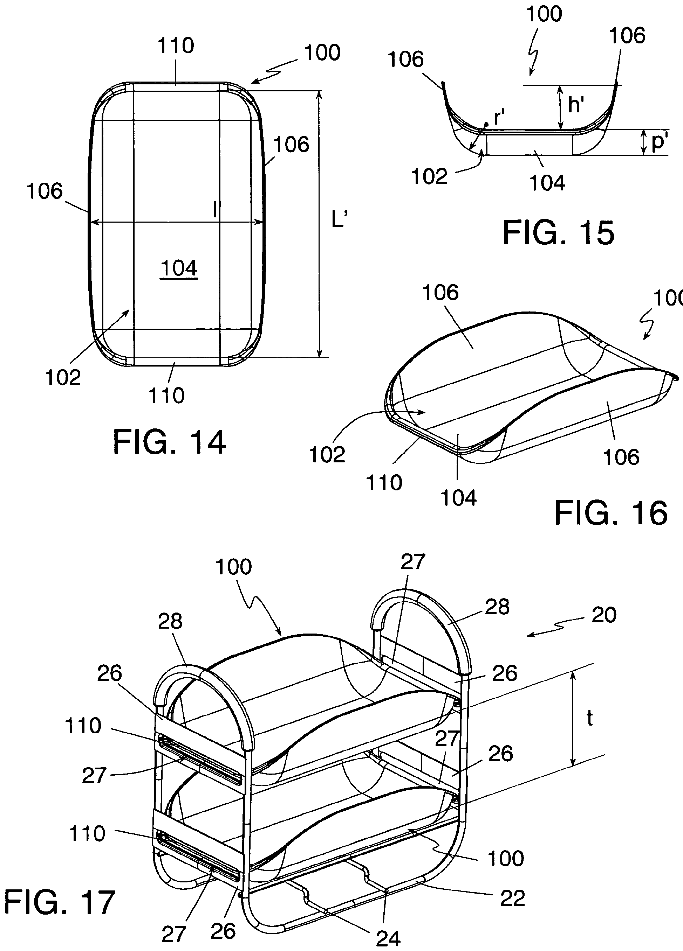

Les figures 14 à 17 présentent ainsi une variante de réalisation de l'invention où le support ne présente qu'une seule empreinte.

Ainsi, un support 100 de pâtons de pain pour leur cuisson dans une machine à pain présente une unique empreinte 102, qui correspond sensiblement à la suppression du rebord 4 du support 1 précédemment décrit.

L'empreinte présente ainsi une longueur L', une largeur l', et une profondeur maximale p'. Les figures 14 à 16 montrent que l'empreinte possède une partie plane 104 reliée aux différentes parois verticales, que sont les parois longitudinales 106 et les parois transversales 110, par un rayon de courbure r', de valeur légèrement inférieure à la profondeur des empreintes, prise par rapport au niveau constitué par le rebord des parois transversales 110.

Selon cette variante de réalisation, la longueur L' est voisine de 185 mm, pour une largeur l' de l'ordre de 120 mm. La profondeur p' est de 20 mm, et le rayon r' de la section des empreintes est voisin de 25 mm.

Par ailleurs, les parois transversales 110 présentent un bord recourbé permettant son accroche sur le support.

Selon cette variante de réalisation, un prolongement vertical 106 des parois est réalisé, de manière similaire aux prolongements 6 décrits précédemment, dans le même but essentiel de protection thermique.

La forme de ce prolongement de paroi est également galbée en présentant des extrémités de raccordement courbées avec les bords latéraux des empreintes. La hauteur maximale h' de ces écrans thermiques, telle que présentée par le support, vers le milieu de sa longueur, et prise par rapport au niveau constitué par le rebord des parois transversales 110, est de l'ordre de 30 mm.

Ces écrans thermiques sont également légèrement inclinés vers l'extérieur du support, afin de faciliter le démoulage du pain après cuisson.

La géométrie extérieure étant sensiblement la même que celle du support 1, l'accessoire de maintien du support 100 peut également être l'accessoire 20 déjà présenté, les fentes 27 des plaques verticales 26 étant suffisamment larges pour accueillir les rebords des parois transversales 110.

De la sorte un second support 100 peut être disposé sur l'accessoire 20.

Le programme correspondant à la réalisation de pain dans les supports 100, en ce qui concerne la cuisson, peut être identique à celui correspondant au support 1 présentant deux empreintes. Toutefois, il sera préférentiellement adapté au type de pain prévu pour ces supports, notamment en liaison avec le mode de préparation de la pâte.

Selon d'autres modes de réalisation, les supports peuvent être directement disposés dans l'enceinte de cuisson, en association avec les parois intérieures de l'enceinte de cuisson, sans accessoire de maintien spécifique.

L'accessoire de maintien des supports peut présenter des moyens de tenue des supports autres que celui présenté, par exemple par une relation de type clipage.

Par ailleurs, les supports peuvent être maintenus sur l'accessoire par leurs bords transversaux.

Concernant l'appareil de préparation et de cuisson, si, certes, de nombreux appareils présentent un seul et même espace de préparation et de cuisson, l'appareil selon l'invention n'est pas limité à un seul espace et peut ainsi comporter plusieurs espaces de préparation et/ou de cuisson, pouvant être pilotés indépendamment les uns des autres.

De plus, divers moyens peuvent être utilisés pour parfaire la cuisson des pâtons. Ainsi, un chauffage par convection forcée peut être utilisé, évitant ainsi les risques de brûlage du pain par rayonnement direct des éléments chauffants tels que présentés, qui nécessitent d'équiper les supports d'écrans thermiques. Cette configuration n'évite toutefois pas l'utilisation brève de rayonnement pour apporter un bon dorage du pain.

La présence d'humidité dans l'enceinte de cuisson peut être envisagée, une coupelle remplie d'eau étant alors disposée dans l'un des espaces libres laissé par l'accessoire lors de l'insertion de ce dernier dans l'appareil.

Par ailleurs, bien que la description n'ait présenté qu'un support disposé dans une machine à pain, la présente invention trouve également son application dans des fours de cuisson domestique, où le support peut être disposé dans l'enceinte du four, sur une grille ou une plaque de cuisson. Un tel support peut alors présenter des géométries plus variées, par la plus grande place offerte dans l'enceinte du four. Le support peut notamment comporter de nombreuses empreintes côte à côte, et présenter une longueur de chaque empreinte légèrement plus importante que celle qui vient d'être présentée. La présence des parois verticales au niveau des bords longitudinaux des supports reste toutefois nécessaire pour éviter des débordements de pâte.

## Revendications

1. Accessoire (20) de cuisson de pâte à pain pour appareil de cuisson, **caractérisé en ce que** cet accessoire (20) comporte :
- un support (1, 100) de cuisson de pâte à pain pour appareil de cuisson, ledit support (1, 100) comportant au moins une empreinte (2, 102) de forme allongée, les bords longitudinaux du support présentant chacun une paroi (6, 106) sensiblement verticale prolongeant un bord latéral respectif de l'au moins une empreinte (2, 102), les bords transversaux du support comportant une zone sensiblement horizontale (10, 110) de préhension et de maintien, la profondeur maximale (p, p') de chaque empreinte (2, 102) étant comprise entre 20 et 50 mm, et
- une armature métallique comprenant deux tiges (22) parallèles en forme de U vertical, maintenues entre elles par des tiges horizontales (24) en partie basse, ainsi que par des plaques transversales (26) reliant les branches verticales des tiges (22), lesdites plaques (26) disposant de fentes (27) en vis-à-vis dans lesquelles sont insérés les bords transversaux (10, 110) du support (1, 100).

2. Accessoire (20) de cuisson de pâte à pain selon la revendication précédente, **caractérisé en ce qu'**il comporte quatre plaques transversales (26) disposées deux par deux en vis-à-vis afin de constituer le maintien de deux supports (1, 100).

3. Accessoire (20) de cuisson de pâte à pain selon l'une des revendications 1 ou 2, **caractérisé en ce qu'**il comporte des poignées (28) de préhension en partie supérieure.

4. Accessoire (20) de cuisson de pâte à pain selon l'une des revendications précédentes, **caractérisé en ce que** chaque empreinte (2, 102) présente une section transversale sensiblement semi-circulaire.

5. Accessoire (20) de cuisson de pâte à pain selon l'une des revendications précédentes, **caractérisé en ce que** le support comporte au moins deux empreintes (2) situées côte à côte selon leur côté le plus long.

6. Accessoire (20) de cuisson de pâte à pain selon l'une des revendications précédentes, **caractérisé en ce que** le rapport longueur (L) sur largeur (l) de chaque empreinte (2) est supérieur à deux.

7. Accessoire (20) de cuisson de pâte à pain selon la revendication précédente, **caractérisé en ce que** le rapport entre la longueur (L) et la largeur (l) de chaque empreinte (2) est compris entre 3 et 5.

8. Appareil électrique (40) de cuisson, comportant un espace de cuisson, des moyens de chauffage (80, 82) de l'espace de cuisson ainsi que des moyens de régulation desdits moyens de chauffage, **caractérisé en ce qu'**un accessoire (20) de cuisson conforme à l'une des revendications 1 à 7 est disposé dans l'espace de cuisson.

9. Appareil électrique (40) selon la revendication 8, **caractérisé en ce qu'**il comporte un espace de préparation de pâte à pain, ainsi qu'une cuve amovible (70) de préparation de la pâte, pouvant être disposée dans l'espace de préparation, en association avec des moyens (76) de pétrissage de ladite pâte.

10. Appareil électrique (40) selon la revendication précédente, **caractérisé en ce qu'**il ne comporte qu'un seul et même espace (45) de préparation et de cuisson de la pâte.

11. Appareil électrique (40) selon l'une des revendications 9 ou 10, **caractérisé en ce qu'**il comporte un programme spécifique permettant une préparation de la pâte dans la cuve (70), par des cycles automatiques de pétrissage et de levée de la pâte, préparation suivie d'une cuisson des pâtons disposés dans les empreintes (2) des supports (1, 100), le démarrage du cycle de cuisson étant subordonné à au moins une action de l'utilisateur sur l'appareil (40).

12. Appareil électrique (40) selon l'une des revendications 9 à 11, **caractérisé en ce qu'**il comporte deux éléments chauffants (80, 82), de type éléments chauffants blindés, l'un (80) étant disposé en partie basse de l'espace (45) de cuisson, l'autre (82) étant disposé en partie haute dudit espace (45).

13. Appareil électrique (40) selon la revendication 9, **caractérisé en ce que** l'accessoire (20) de cuisson, équipé du ou des support(s) (1, 100), peut être rangé dans la cuve (70) de préparation de la pâte dont est pourvu l'appareil (40).

## Patentansprüche

1. Zubehör (20) zum Backen von Brotteig für ein Backgerät, **dadurch gekennzeichnet, dass** das Zubehör (20) aufweist:
- einen Träger (1, 100) zum Backen von Brotteig für ein Backgerät, wobei der Träger (1, 100) mindestens eine Vertiefung (2, 102) mit länglicher Form aufweist, wobei die Längskanten des Trägers jeweils eine im Wesentlichen vertikale Wand (6, 106) aufweisen, die eine jeweilige Längskante der mindestens einen Vertiefung (2, 102) verlängert, wobei die Querkanten des Trägers einen im Wesentlichen horizontalen Bereich (10, 110) zum Greifen und zur Halterung aufweisen, wobei die maximale Tiefe (p, p') jeder Vertiefung (2, 102) zwischen 20 und 50 mm liegt, und
- einen Metallrahmen, der zwei parallele Stangen (22) in Form eines vertikalen U umfasst, die durch horizontale Stangen (24) im unteren Teil sowie durch Querplatten (26) zusammengehalten werden, die die vertikalen Abzweigungen der Stangen (22) verbinden, wobei die Platten (26) über Schlitze (27) verfügen, in die die Querkanten (10, 110) des Trägers (1, 100) eingesetzt sind.

2. Zubehör (20) zum Backen von Brotteig nach dem vorhergehenden Anspruch, **dadurch gekennzeichnet, dass** es vier paarweise gegenüberliegende Querplatten (26) aufweist, um die Halterung von zwei Trägern (1, 100) zu bilden.

3. Zubehör (20) zum Backen von Brotteig nach einem der Ansprüche 1 oder 2, **dadurch gekennzeichnet, dass** es Griffe (28) zum Greifen am oberen Teil aufweist.

4. Zubehör (20) zum Backen von Brotteig nach dem vorhergehenden Anspruch, **dadurch gekennzeichnet, dass** jede Vertiefung (2, 102) einen im Wesentlichen halbkreisförmigen Querschnitt vorweist.

5. Zubehör (20) zum Backen von Brotteig nach dem vorhergehenden Anspruch, **dadurch gekennzeichnet, dass** der Träger mindestens zwei Vertiefungen (2) aufweist, die sich nebeneinander entlang seiner längsten Seite befinden.

6. Zubehör (20) zum Backen von Brotteig nach dem vorhergehenden Anspruch, **dadurch gekennzeichnet, dass** das Verhältnis von Länge (L) zu Breite (l) jeder Vertiefung (2) größer als zwei ist.

7. Zubehör (20) zum Backen von Brotteig nach dem vorhergehenden Anspruch, **dadurch gekennzeichnet, dass** das Verhältnis zwischen der Länge (L) und der Breite (l) jeder Vertiefung (2) zwischen 3 und 5 liegt

8. Elektrisches Gerät (40) zum Backen, aufweisend einen Backraum, Mittel (80, 82) zum Heizen des Backraums sowie Mittel zur Regelung der Heizmittel, **dadurch gekennzeichnet, dass** ein Zubehör (20) zum Backen nach einem der Ansprüche 1 bis 7 in dem Backraum angeordnet ist.

9. Elektrisches Gerät (40) nach Anspruch 8, **dadurch gekennzeichnet, dass** es einen Raum zur Zubereitung von Brotteig sowie einen abnehmbaren Tank (70) zur Zubereitung von dem Teig aufweist, der in dem Zubereitungsraum in Verbindung mit Mitteln (76) zum Kneten des Teigs angeordnet werden kann.

10. Elektrisches Gerät (40) nach dem vorhergehenden Anspruch, **dadurch gekennzeichnet, dass** es nur ein und denselben Raum (45) zur Zubereitung und zum Backen des Teigs umfasst.

11. Elektrisches Gerät (40) nach einem der Ansprüche 9 oder 10, **dadurch gekennzeichnet, dass** es ein spezifisches Programm aufweist, das eine Zubereitung des Teigs in dem Tank (70) durch automatische Zyklen des Knetens und des Aufgehens des Teigs ermöglicht, wobei die Zubereitung vom Backen der Teiglinge gefolgt wird, die in den Vertiefungen (2) der Träger (1, 100) angeordnet sind, wobei der Beginn des Backzyklus von mindestens einer Handlung des Benutzers auf dem Gerät (40) abhängig ist.

12. Elektrisches Gerät (40) nach einem der Ansprüche 9 bis 11, **dadurch gekennzeichnet, dass** es zwei Heizelemente (80, 82) vom Typ gepanzerter Heizelemente aufweist, von denen eines (80) im unteren Teil des Raums (45) zum Backen angeordnet ist, wobei das andere (82) im oberen Teil des Raums (45) angeordnet ist.

13. Elektrisches Gerät (40) nach Anspruch 9, **dadurch gekennzeichnet, dass** das Zubehör (20) zum Backen, das mit einem Träger oder Trägern (1, 100) ausgestattet ist, in dem Tank zur Zubereitung von Teig (70) verwahrt werden kann, mit dem das Gerät (40) versehen ist.

## Claims

1. Accessory (20) for cooking bread dough for a cooking appliance, **characterised in that** this accessory (20) comprises:
- a support (1, 100) for cooking bread dough for a cooking appliance, said support (1, 100) comprising at least one imprint (2, 102) of elongated shape, with the longitudinal edges of the support each having a substantially vertical wall (6, 106) extending a respective lateral edge of the at least one imprint (2, 102), with the transversal edges of the support comprising a substantially horizontal zone (10, 110) for grasping and maintaining, with the maximum depth (p, p') of each imprint (2, 102) being between 20 and 50 mm, and
- a metal framework comprising two parallel rods (22) in the shape of a vertical U, maintained together by horizontal rods (24) in the bottom portion, as well as by transversal plates (26) connecting the vertical branches of the rods (22), said plates (26) having facing slots (27) in which the transversal edges (10, 110) of the support (1,100) are inserted.

2. Accessory (20) for cooking bread dough according to the preceding claim, **characterised in that** it comprises four transversal plates (26) arranged facing two-by-two so as to form the maintaining of two supports (1, 100).

3. Accessory (20) for cooking bread dough according to one of claims 1 or 2, **characterised in that** it comprises grasping handles (28) in the upper portion.

4. Accessory (20) for cooking bread dough according to one of the preceding claims, **characterised in that** each imprint (2, 102) has a substantially semi-circular transversal section.

5. Accessory (20) for cooking bread dough according to one of the preceding claims, **characterised in that** the support comprises at least two imprints (2) located side-by-side along the longest side thereof.

6. Accessory (20) for cooking bread dough according to one of the preceding claims, **characterised in that** the ratio of the length (L) to the width (I) of each imprint (2) is greater than two.

7. Accessory (20) for cooking bread dough according to the preceding claim, **characterised in that** the ratio between the length (L) and the width (I) of each imprint (2) is between 3 and 5.

8. Electrical cooking appliance (40), comprising a cooking space, means for heating (80, 82) the cooking space as well as means for regulating said means of heating, **characterised in that** a cooking accessory (20) in accordance with one of claims 1 to 7 is arranged in the cooking space.

9. Electrical appliance (40) according to claim 8, **characterised in that** it comprises a preparation space for bread dough, as well as a removable tank (70) for preparing the dough, able to be arranged in the preparation space, in association with the means for (76) kneading said dough.

10. Electrical appliance (40) according to the preceding claim, **characterised in that** it comprises a single space (45) for preparing and cooking the dough.

11. Electrical appliance (40) according to one of claims 9 or 10, **characterised in that** it comprises a specific program allowing for the preparation of the dough in the tank (70), via automatic kneading and raising cycles of the dough, preparation followed by a cooking of the pieces of dough arranged in the imprints (2) of the supports (1, 100), with the starting of the cooking cycle being subordinated to at least one action from the user on the appliance (40).

12. Electrical appliance (40) according to one of claims 9 to 11, **characterised in that** it comprises two heating elements (80, 82), of the shielded heating element type, with one (80) being arranged in the bottom portion of the cooking space (45), the other (82) being arranged in the top portion of said space (45).

13. Electrical appliance (40) according to claim 9, **characterised in that** the cooking accessory (20), provided with the support or supports (1, 100), can be stored in the tank (70) for preparing the dough that the appliance (40) is provided with.
